# EUROPEAN PATENT APPLICATION

(11) **EP 4 036 767 A1**
(43) Date of publication of application: **03.08.2022**
(21) Application number: 22151843.4
(22) Date of filing: 17.01.2022
(51) Int. Cl.: G06F 21/14, G06F 21/75, G06F 21/86

(54) **ARRANGEMENT COMPRISING A MULTI-LAYER PRINTED CIRCUIT BOARD AND METHOD FOR OPERATING A MULTI-LAYER PRINTED CIRCUIT BOARD**

(30) Priority: 28.01.2021 DE 102021200770
(71) Applicant: Continental Automotive Technologies GmbH, 30165 Hannover (DE)
(72) Inventor: Lange, Roland, 60488 Frankfurt am Main (DE); Morstein, Viktor, 42579 Heiligenhaus (DE)
(74) Representative: Continental Corporation

(57) **Abstract**

An arrangement comprising a multi-layer printed circuit board and a security controller is provided. The circuit board comprises one or more central layers and one or more outer layers. The outer layers at least partially enclose the central layers. The outer layers are electrically connected to a security controller. The security controller is arranged for, during a first operation: determining a first value of an electrical variable relating to said outer layers; generating a first digital code based on said first value; and transferring said first digital code to an application for encryption. During a further operation the security controller is arranged for determining a second value of said electrical variable; generating a second digital code based on said second value; transferring said second digital code to said application for decryption.

## Description

### BACKGROUND

Devices in vehicles with so-called multi-layer printed circuit boards may be physically attacked to change or manipulate its functioning. Protecting them is difficult since the attacker has control of the physical environment of the device. Usually a sensor is attached or included that will register any physical attack during operation and when the device is switched off. However, these sensors usually require electrical power and thus a battery for powering the sensor at least when the device is switched off. Including a battery in the device may not be possible due to other design criteria.

Therefore, the objective of the invention is to provide a multi-layer printed circuit board, that is protected against physical attacks without using a battery.

### SUMMARY

The objective of the invention is met by providing an arrangement according to claim 1 and a method for operating a multi-layer printed circuit board and a security controller according to claim 9.

In a first aspect of the invention, an arrangement is provided comprising:
- a multi-layer printed circuit board comprising one or more central layers and one or more outer layers, wherein said one or more outer layers at least partially enclose the central layers;
- a security controller,
   wherein said outer layers are electrically connected to the security controller;
   wherein the security controller is arranged for, during a first operation:
- determining a first value of an electrical variable relating to said outer layers;
- generating a first digital code based on said first value; and,
- transferring said first digital code to an application for encryption;
wherein the security controller is arranged for, during a further operation:
- determining a second value of said electrical variable;
- generating a second digital code based on said second value; and,
- transferring said second digital code to said application for decryption.

The security controller uses an electrical variable, such as capacitance or resistance, as basis for a first digital code for encryption during a first operation. This first operation may take place when the multi-layer printed circuit board is still in the factory, where the multi-layer printed circuit board (or a vehicle device with the multi-layer printed circuit board) is assembled and tested.

During further operations, which may take place when the multi-layer printed circuit board is used inside a vehicle device, the security controller uses the same electrical variable as basis for a second digital code for decryption.

When physical attack has taken place, for example by drilling into the central layers, the outer layers will be affected or damaged, causing the electrical variable to change. This will result in a second digital code which will be different than the first digital code. Thus, after a physical attack, decryption can no longer take place.

Furthermore, when the arrangement is not in operation, no digital code for the decryption is stored in the arrangement. Therefore, it cannot be retrieved by an attacker.

The arrangement as described in this document does not require a battery to power any of the security controller, the multi-layer printed circuit board and the application when the arrangement is switched off or not powered.

In one or more embodiments, said one or more outer layers comprise one or more integrated circuits with said security controller, or said security controller is located outside of the multi-layer printed circuit board.

In one or more embodiments, the arrangement comprises said application, wherein said application is comprised in said one or more integrated circuits, or said application is located outside of the multi-layer printed circuit.

In one or more embodiments, said application is arranged for using said first/second digital code for encrypting/decrypting: (i) a communication with said application; (ii) a part of a code of said application code; and/or (iii) data stored by said application.

In this case, it may be the case if the decryption is successful, the application will be able to function. Thus, the application can only be used when the first digital code is identical to the second digital code.

In one or more embodiments, said application is a Hall IC velocity sensor.

In a second aspect, a vehicle device is provided comprising an arrangement according to any of the embodiments as described in this document. Also, a vehicle with such a vehicle device is provided.

In a third aspect of the invention a (computer-implemented) method for operating a multi-layer printed circuit board and a security controller is provided, wherein the multi-layer printed circuit board comprises one or more central layers and one or more outer layers, wherein said one or more outer layers at least partially enclose the central layers, wherein said method comprises the steps of:
during a first operation:
   - determining a first value of an electrical variable relating to said outer layers;
   - generating a first digital code based on said first value;
   - transferring said first digital code to an application for encryption; and,
during a further operation:
   - determining a second value of said electrical variable;
   - generating a second digital code based on said second value; and,
   - transferring said second digital code to said application for decryption.

In one or more embodiment, the method further comprises using said first/second digital code for encrypting/decrypting: (i) a communication with said application; (ii) a part of a code of said application code; and/or, (iii) data stored by said application.

Furthermore, a computer program is provided comprising instructions which, when the program is executed by a computer, cause the computer to carry out the steps of the any method of described in this document. A computer-readable medium is provided having stored thereon this computer program.

The working, advantages and embodiments of the method for detecting a physical attack on a multi-layer printed circuit board, the vehicle device and the vehicle, as well as the working, advantages and embodiments of the computer program and computer-readable medium, correspond with the working, advantages and embodiments of the multi-layer printed circuit board as discussed in this document, mutatis mutandis.

### BRIEF DESCRIPTION OF THE DRAWINGS

For a more complete understanding of the present invention, reference in the following description is made to the accompanying drawings in which:
Figure 1 shows a schematic overview of an arrangement according to one or more embodiments;
Figure 2 shows a schematic overview of an electrical capacitance and an electrical resistance measured inside of a multi-layer printed circuit board according to one or more embodiments.
Figure 3 shows a schematic overview of vehicle device according to one or more embodiments and a vehicle with such a device; and,
Figure 4 shows a schematic overview of a method for operating a multi-layer printed circuit board according to one or more embodiments.

### DETAILED DESCRIPTION

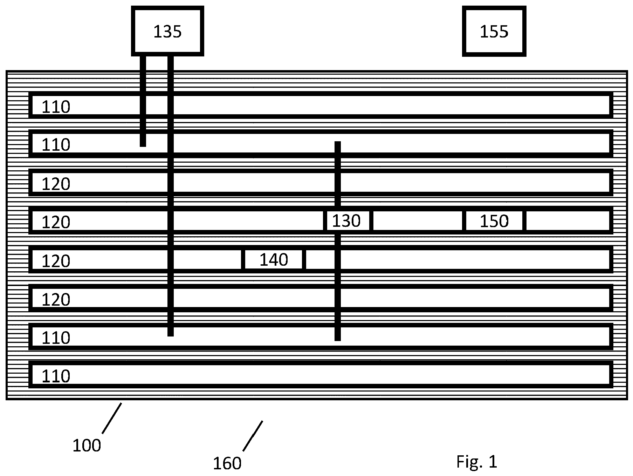

Figure 1 shows a schematic overview of an arrangement 160, comprising a multi-layer printed circuit board 100 and a security controller 130, 135 according to one or more embodiments. The multi-layer printed circuit board 100 comprising one or more central layers 120 and one or more outer layers 110. The outer layers 110 are at least partially electrically conductive.

The central layers 120 may comprise one or more integrated circuits, which in one or more embodiments comprises a security controller 130. In fig. 1 an alternative location of the security controller is shown, in which the security controller 135 is located outside of the multi-layer printed circuit board 100.

In one or more embodiments, the one or more integrated circuits may comprise one or more application 140, 150. In fig. 1 an alternative location of the application is shown in which the application 155 is located outside of the multi-layer printed circuit board 100.

In one or more embodiments, the outer layers 110 enclose at least partially or even completely the central layers 120. The more the outer layer enclose the central layers, the less likely is it that an attacker can physically access the central layers without damaging the outer layers.

The one or more outer layers 110 are electrically connected to the security controller 130, 135. In one or more embodiments, at least two outer layers 110 are electrically connected to the security controller. In one or more embodiments, the outer layers are located at opposite sides of said one or more central layers 120.

Since the outer layers 110 are at least partially electrically conductive, a value of an electrical capacitance or electrical resistance may be determined, for example by security controller 130, 135. A first value of another electrical variables may also be determined alternatively.

In case at least two different outer layers are located at opposite sides of said one or more central layers 120, an electrical capacitance or an electrical resistance may be measured between the at least two outer layers.

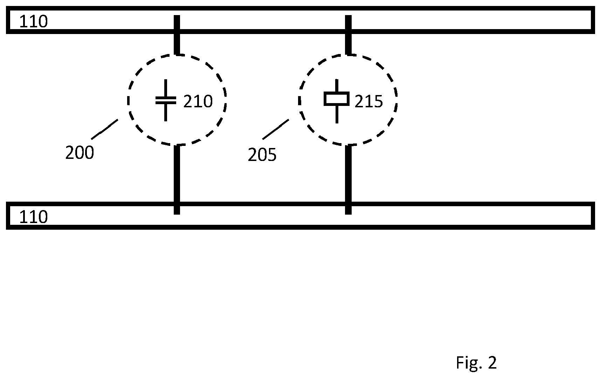

Figure 2 shows a schematic overview of two examples of an electrical variable: an electrical capacitance 210 and an electrical resistance 215, measured inside of a multi-layer printed circuit board according to one or more embodiments, indicated in circle 200 and circle 205 respectively.

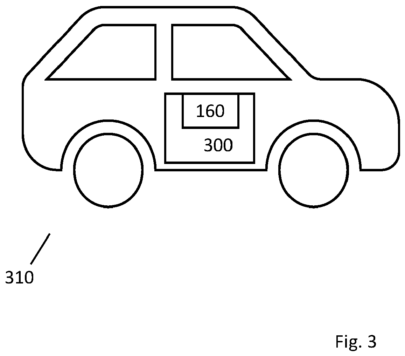

The arrangement 160 according to any of the embodiments described in this document, may be embedded or incorporated in a vehicle device 300, which is installed in vehicle 310, as is indicated in figure 3.

During a first operation, a first value of the electrical variable 210, 215 is determined or measured by security controller 130, 135. In one or more embodiments, the first operation takes place in a factory in which said arrangement 160 or said vehicle device 300 with said arrangement 160 is assembled or manufactured. Therefore, it is assumed that before and during the first operation, no physical attack can take place on said multi-layer printed circuit board 100.

The security controller 130, 135 is further arranged for generating a first digital code based on said first value and for transferring said first digital code to one or more applications for encryption.

Said application may be located in said one or more integrated circuits as is indicated by 140 and 150 or may be located outside of outside of the multi-layer printed circuit, which is indicated by 155.

In one or more embodiments, said application 140, 150, 155 may be arranged for using said first digital code for encrypting (i) a communication with said application; (ii) a part of a code of said application code; and/or (iii) data stored by said application.

During a second or further operation, a second value of said electrical variable is measured or determined by security controller 130, 135. In one or more embodiments, the second or further operation takes place outside said factory, for example when said arrangement is used in vehicle device 300 or in a vehicle 310 with said vehicle device 300. It is assumed that a physical attack could take place on said multi-layer printed circuit board 100 during or before said second or further operation.

Such a physical attack will damage said outer layers 110 that are electrically connected to the security controller 130, 135 and will influence the electrical variable relating to said outer layers 110.

The security controller 130, 135 is further arranged for generating a second digital code based on said second value and for transferring said second digital code to said one or more applications for decryption.

In one or more embodiments, application 140, 150, 155 may be arranged for using said second digital code for decrypting (i) said communication with said application; (ii) said part of a code of said application code; and/or, (iii) said data stored by said application.

Decryption will only take place (or will only be successful) when the first and second digital code are identical. This will only be the case when the first and second value are (substantially) the same, indicating that no physical attack has taken place on said multi-layer printed circuit board 100.

Figure 3 shows a schematic overview of vehicle device 300 according to one or more embodiments and a vehicle 310 with such a device 300.

In one or more embodiments, application 140, 150, 155 is a Hall IC velocity sensor. In that case the vehicle device 300 may be a velocity detecting device.

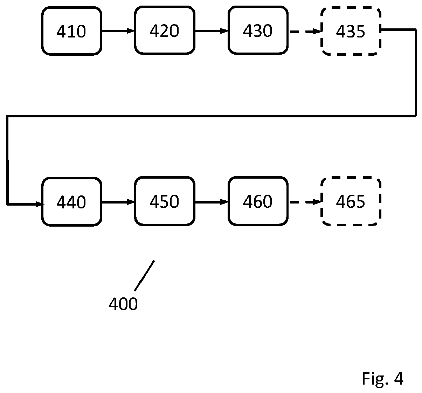

Figure 4 shows a schematic overview of a method 400 for operating a multi-layer printed circuit board and a security controller according to one or more embodiments. The multi-layer printed circuit board comprises one or more central layers and one or more outer layers, wherein said one or more outer layers at least partially enclose the central layers.

The method 400 comprises the steps of:
during a first operation:
   step 410: determining a first electrical variable relating to outer layers;
   step 420: generating a first digital code based on said first value; and,
   step 430: transferring said first digital code to an application for encryption;
and during a further operation:
   step 440: determining a second value of said electrical variable;
   step 450: generating a second digital code based on said second value; and,
   step 460: transferring said second digital code to said application for decryption.

These steps may be executed by the security application.

In one or more embodiments of method 400, the method further comprises:
step 435: using said first digital code for encrypting: (i) a communication with said application; (ii) a part of a code of said application; and/or, (iii) data stored by said application; and,
step 465: using said second digital code for decrypting: (i) said communication with said application; (ii) said part of a code of said application; and/or, (iii) said data stored by said application.

These steps may be executed by the application 140.

Those of skill will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Those of skill in the art may implement the described functionality in varying ways for each particular application, but such implementation decisions should not be interpreted as causing a departure from the scope of the present invention.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

The benefits and advantages that may be provided by the present invention have been described above with regard to specific embodiments. These benefits and advantages, and any elements or limitations that may cause them to occur or to become more pronounced are not to be construed as critical, required, or essential features of any or all of the claims. As used herein, the terms "comprises," "comprising," or any other variations thereof, are intended to be interpreted as non-exclusively including the elements or limitations which follow those terms. Accordingly, a system, method, or other embodiment that comprises a set of elements is not limited to only those elements and may include other elements not expressly listed or inherent to the claimed embodiment.

While the present invention has been described with reference to particular embodiments, it should be understood that the embodiments are illustrative and that the scope of the invention is not limited to these embodiments. Many variations, modifications, additions and improvements to the embodiments described above are possible. It is contemplated that these variations, modifications, additions and improvements fall within the scope of the invention as detailed within the following claims.

## Claims

1. An arrangement comprising:
- a multi-layer printed circuit board comprising one or more central layers and one or more outer layers,
wherein said one or more outer layers at least partially enclose the central layers;
- a security controller,
wherein said outer layers are electrically connected to the security controller; wherein the security controller is arranged for, during a first operation:
- determining a first value of an electrical variable relating to said outer layers;
- generating a first digital code based on said first value; and,
- transferring said first digital code to an application for encryption;
wherein the security controller is arranged for, during a further operation:
- determining a second value of said electrical variable;
- generating a second digital code based on said second value; and, transferring said second digital code to said application for decryption.

2. Arrangement according to claim 1,
wherein said one or more outer layers comprise one or more integrated circuits with said security controller, or
wherein said security controller is located outside of the multi-layer printed circuit board.

3. Arrangement according to claim 1 or 2, further comprising said application, wherein said application is comprised in said one or more integrated circuits, or, wherein said application is located outside of the multi-layer printed circuit.

4. Arrangement according to any of claims 1-3,
wherein said application is arranged for using said first/second digital code for encrypting/decrypting:
(i) a communication with said application;
(ii) a part of a code of said application code; and/or,
(iii) data stored by said application.

5. Arrangement according to any of claims 1-4,
wherein said application is a Hall IC velocity sensor.

6. Arrangement according to any of claims 1-5,
wherein said electrical variable is a capacitance or a resistance of said one or more outer layers.

7. Vehicle device, comprising an arrangement according to any of claims 1-6.

8. Vehicle with a vehicle device according to claim 7.

9. Method for operating a multi-layer printed circuit board and a security controller, wherein the multi-layer printed circuit board comprises one or more central layers and one or more outer layers,
wherein said one or more outer layers at least partially enclose the central layers, wherein said method comprises, the steps of:
during a first operation:
- determining a first value of an electrical variable relating to said outer layers;
- generating a first digital code based on said first value;
- transferring said first digital code to an application for encryption; and,
during a further operation:
- determining a second value of said electrical variable;
- generating a second digital code based on said second value; and, transferring said second digital code to said application for decryption.

10. Method according to claim 9,
wherein the method further comprises:
- using said first/second digital code for encrypting/decrypting:
(i) a communication with said application;
(ii) a part of a code of said application code; and/or,
(iii) data stored by said application.

11. A computer program comprising instructions which, when the program is executed by a computer, cause the computer to carry out the steps of the method of any of claims 9-10.

12. A computer-readable medium having stored thereon the computer program of claim 11.
